Europäisches Patentamt

European Patent Office

Office européen des brevets

(19)

(11) **EP 0 923 766 B1**

(12) **EUROPEAN PATENT SPECIFICATION**

(45) Date of publication and mention
of the grant of the patent:
**02.05.2003   Bulletin 2003/18**

(21) Application number: **98912657.8**

(22) Date of filing: **20.04.1998**

(51) Int Cl.⁷: **G06T 15/10**, G06T 17/20

(86) International application number:
**PCT/IB98/00591**

(87) International publication number:
**WO 98/057301 (17.12.1998 Gazette 1998/50)**

(54) **COMPUTER GRAPHICS METHOD AND DEVICE**

COMPUTERGRAFIKVERFAHREN UND VORRICHTUNG

PROCEDE ET DISPOSITIF D'INFOGRAPHIE

(84) Designated Contracting States:
**DE FR GB**

(30) Priority: **13.06.1997   EP 97201786**

(43) Date of publication of application:
**23.06.1999   Bulletin 1999/25**

(73) Proprietor: **Koninklijke Philips Electronics N.V.
5621 BA Eindhoven (NL)**

(72) Inventor: **BRUIJNS, Johannes
NL-5656 AA Eindhoven (NL)**

(74) Representative:
**Groenendaal, Antonius Wilhelmus Maria et al
INTERNATIONAAL OCTROOIBUREAU B.V.,
Prof. Holstlaan 6
5656 AA Eindhoven (NL)**

(56) References cited:
**WO-A-94/17486**

**Description**

The invention relates to a computer graphics rendering method according to the preamble of Claim 1 and to a device implementing the method.

Such a method is known from an article by Alyn Rockwood, Kurt Heaton and Tom Davis, titled "Real-Time Rendering of Trimmed Surfaces" and published in Computer Graphics, Volume 23, Number 3, July 1989 pages 107-116, which will be referred to as "the Rockwood article". The Rockwood article describes a way of translating an algebraic model of a curved surface patch into a mesh of flat triangles approximating the surface patch. This makes it possible to combine the advantages of the compactness of the algebraic model with the rendering efficiency of known devices for rendering a mesh of flat triangles.

The algebraic models used in computer graphics use a parameter space, with points having parameter coordinates (u,v). An area from parameter space is mapped to the curved surface patch, with points having three dimensional coordinates (x,y,z). The Rockwood article uses a rectangular area. In the interior of this rectangular area in parameter space a grid of evenly spaced points is defined. The coordinates of the points on the surface patch to which this grid of points maps are computed. In the interior the mesh is constructed from rectangles that have these selected points on the surface patch as their corner points.

Points on the boundary edges of the rectangular area are also used to compute coordinates of corner points of triangles in the mesh, but the selection of these points on the boundary edges is treated separately from selection of the grid of points in the interior. The reason for this is that a graphics model is usually made up of a patchwork of abutting surface patches. In this case, a boundary curve of the surface patch usually coincides with the boundary curve of an adjacent surface patch. To prevent that cracks (or holes) appear between the two meshes used to approximate two adjacent surface patches respectively, it must be ensured that on the shared boundary curve between the adjacent surface patches the same points are used for generating both meshes. This is realized by selecting the spacing of the points on each boundary edge of the rectangular area in dependence on the properties of the corresponding boundary curve only, so that these points are the same, no matter what shape is defined for the rest of the surface patch.

As a result, the spacing of the points on the boundary edges of the rectangular area may differ from the spacing of the grid of points facing these boundary edges. This means that to form flat triangles a special algorithm is required to connect points of the surface patch corresponding to the boundary edge and points of the surface patch corresponding to the grid.

WO 94/17486 discloses a method and apparatus for tessellating 3D Spline Surfaces which are separated into a series of subpatches corresponding to a series of intervals defining grid points in parameter space. Selecting sub-patches is based on evaluating criteria such as continuity of subpatches, visibility of subpatcher and granularity for discretisation.

The invention is defined by claims 1 - 14.

Amongst others, it is an object of the invention to provide for a method according to the preamble of claim 1 in which connection of points of the surface patch corresponding to the boundary edge and points of the surface patch corresponding to the grid is simplified for at least one of the boundary edges without undue loss of accuracy of the approximation of the surface patch by a mesh of flat triangles.

The method according to the invention is characterized by the characterizing part of Claim 1. As a result no special connection measures are needed at least between the segmentation points on the selected boundary edge and the grid. It has been found that the extension of the segmentation step size of a boundary edge to define the grid size of the interior generally provides a sufficiently accurate approximation for rendering purposes, provided one uses the boundary edge that contains the most segmentation points, or at least no fewer segmentation points than any other boundary edge. The approximation is particularly good for curved surface patches that have a minimum number of boundary edges, preferably three boundary edges.

An embodiment of the method according to the invention is characterized by the characterizing part of claim 2. By proper adaptive selection of the boundary edges between which the straight lines extend, it is thus ensured that for two of the three boundary edges no special connection measures are needed.

A further embodiment of the method according to the invention is characterized by the characterizing part of claim 3. In a forward difference computation new coordinates are computed by adding an offset to preceding coordinates. The offset itself is also be computed by adding a further offset to a preceding offset. For a polynomial of second degree in the parameter space coordinates the further offset is constant along the straight line; for higher order polynomials the further offset is computed by adding a yet further offset to the further offset used for a preceding point along the straight line and so on. The forward difference computation eliminates the need to perform multiplications to compute the coordinates of different points, making it possible to use simple dedicated hardware which is able to perform this computation quickly.

A further embodiment of the method according to the invention is characterized by the characterizing part of claim 4. When the points are evenly spaced along the straight line from one boundary edge to the other, computation of the initial values by means of forward difference is only possible if the number of point on a particular straight line is either the same for each particular straight line or increases by a constant number from one straight line to the other away from he point where the boundary edges intersect.

Another embodiment of the method according to the invention is characterized in that by the characterizing part of claim 5. It has been found that the curvature of the line that corresponds to a boundary edge in the rendered image is the most important criterion for selecting the required number of segmentation points on that boundary edge.

Another embodiment of the method according to the invention is characterized by the characterizing part of claim 7. By selecting between different methods given the number of segmentation points used for the curved surface patch under particular viewing circumstances, one may for example minimize the number of generated flat triangles.

A rendering device according to the invention is defined by claims 8-14.

These and other advantageous aspects of the invention will be non-limitatively described using the attached figures, of which

Figure 1 shows an apparatus for graphics rendering of a modeled object,
Figure 2 shows the geometry an object described by a number of curved surface patches,
Figure 3 shows surface patches approximated by flat triangles,
Figure 4 shows a flow chart for generating the set of flat triangles,
Figure 4a illustrates a method of computing a number of segments,
Figure 5a-e illustrate the generation of a set of flat triangles,
Figure 6a-e illustrate the generation of a set of flat triangles,
Figure 7a-c illustrate the generation of flat triangles in an interface band.

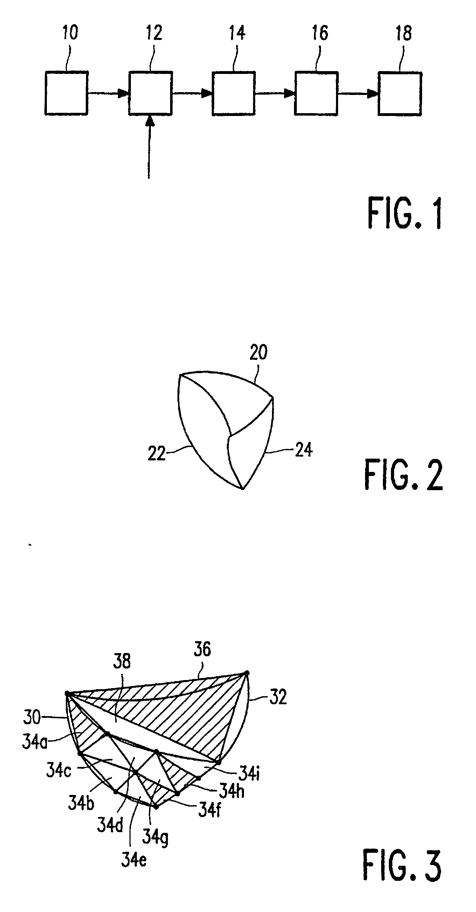

Figure 1 shows an apparatus for computer graphics rendering of a modeled object. The apparatus contains a memory 10 for parameters that describe the geometry of an object. The memory 10 is coupled to a transformation unit 12 which transforms the parameters. The transformation unit 12 is coupled to a flat triangle generating unit 14 which uses the parameters of the model to generate a description of a set of flat triangles which a approximate the surface of the object. The triangle generating unit 14 is coupled to a triangle rendering unit 16, which computes the pixel values of an image of the flat triangles. Triangle rendering units 16 are known per se and are capable of rendering sets of flat triangles very efficiently. The triangle rendering unit 16 is coupled to a display unit 18, such as a CRT or LCD unit, which displays an image containing a rendering of the flat triangles. At least part of the apparatus may be implemented as a suitably programmed general purpose computer. Parts of the apparatus, such as the triangle rendering unit 16 may also be implemented as fast dedicated hardware.

Figure 2 shows the geometry an object described by a number of curved surface patches 20, 22, 24. Curved surface patches 20, 22, 24 can be described for example as Bezier triangles. To describe a curved surface patch 20, 22, 24 as a Bezier triangle, the memory 10 stores the three dimensional coordinates of a number of control points. The control points define a mapping from two-dimensional barycentric surface coordinates (u,v,w) in a triangular domain (1>u>0,1>v>0,1>w>0, u+v+w=1) to points on the curved surface patch 20, 22, 24. When the model contains neighbouring Bezier triangles, these Bezier triangles are defined so that a boundary edge (i.e. either the boundary edge defined by u=0, or the boundary edge defined by v=0 or the boundary edge defined by w=0) of one Bezier triangle coincides with a boundary edge of the neighbouring Bezier triangle. For Bezier triangles this is a matter of sharing some of the control points between neighbouring Bezier triangles. Thus a continuous description of the surface of the object is realized.

When an object described by Bezier triangles is to be rendered, the transformation unit 12 receives the coordinates of the control points and transforms these coordinates, for example to determine the coordinates of the control points in a coordinate frame defined by a user selectable viewpoint and view-direction. The transformation unit 12 supplies the transformed coordinates of the control points to the flat triangle generating unit 14. The flat triangle generating unit 14 uses the transformed parameters of the model to generate a description of a set of flat triangles which a approximate the surface of the object.

Figure 3 shows surface patches 30, 32 approximated by flat triangles 34a-i, 36. The number of triangles used to approximate the curved surface patches 30, 32 is a compromise: the approximation will become better as more flat triangles are used to represent one curved surface patch, and on the other hand the time needed by the triangle rendering unit 16 to render the triangles becomes less as fewer flat triangles are used. To attain an optimal compromise, the flat triangle generating unit 16 selects the number of triangles in dependence of properties of the curved surface patch and circumstances under which the curved surface patches 30, 32 are to be rendered: for example in dependence on the curvature of the surface patch 30, 32, the number of pixels taken up by the curved surface patch 30, 32 in the image on the display unit 18, the angle range between the line of view to the curved surface patch 30, 32 from the viewpoint, the required image quality etc.

When the selection of the number of flat triangles for different surface patches is different for neighbouring surface patches 30, 32, a crack 38 may appear between neighbouring surface patches, i.e. in the approximation the surface of the modeled object may have areas for which no visual properties are computed. This would lead to undesirable artifacts in the displayed image. This is prevented by starting the process of generating flat triangles at the boundary edges of the curved surface patch which is to be approximated by these flat triangles. Each boundary edge is approximated by a set of linked straight line segments, which is selected as a function of the properties of the boundary edge, the viewing circumstances etc., but independent of properties of the surface patch as far as they don't affect the boundary edge. The same selection criteria are used for a shared boundary edge of two adjacent curved surface patches, and therefore the same set of linked straight line segments will be chosen for the shared boundary edge of those adjacent surface patches.

Subsequently the interior of the curved surface patch is approximated by flat triangles. In this approximation it is ensured that the straight line segments are edges of the flat triangles at the boundary of the set of flat triangles used to approximate the interior.

For a boundary edge of a Bezier triangle (e.g. the boundary edge with u=0) the linked straight line segments may be obtained for example by selecting equidistant two-dimensional surface coordinate sets, e.g. $(u,v,w)=(0,m/n, 1-m/n)$ where n is a positive integer and m = 0,1...n. The Bezier triangle description maps these coordinate sets to three dimensional points along the boundary edge. In this case the straight lines connecting points in three dimensional space with successive values of "m" are used in the set of straight line segments. Thus in this case the end-points of the straight line segments are points on the boundary edge of the curved surface, which ensures that the straight line segments approximate the boundary edge.

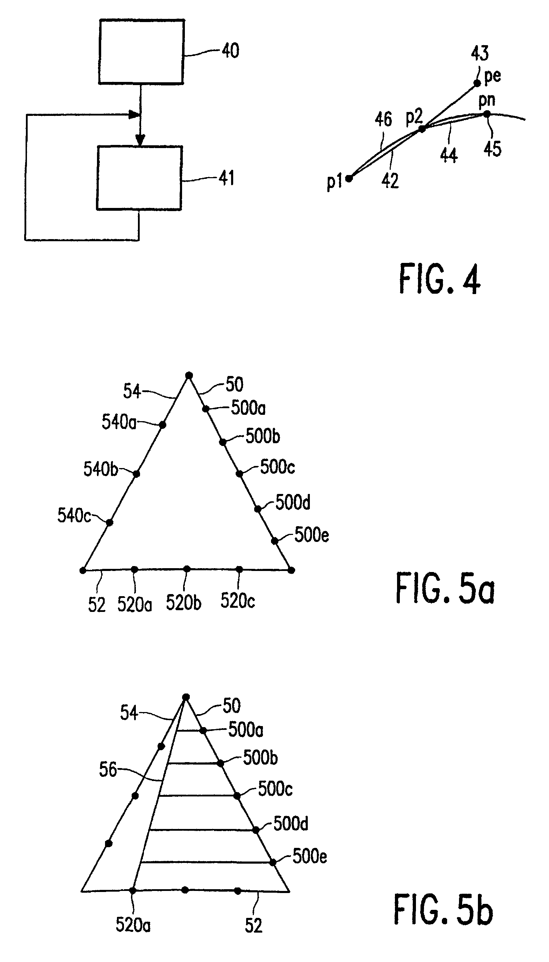

Figure 4 shows a flow chart for generating the set of flat triangles. In a first step 40 it is computed for each boundary edge into how many segments the boundary edge should be split. In a second step 41 a set of flat triangles is computed that contains flat triangles which have these segments into which each of the boundary edges are split as edges. This is repeated for a number of surface patches.

The number of straight line segments in that into which a boundary edge is split ("n" in the example given above), is preferably selected according to the properties of the edge and the viewing circumstances. In a preferred embodiment the number is selected by computing a number indicative of the maximum distance in the rendered image between any straight line segment used to approximate the boundary edge and the actual (curved) boundary edge if that would be shown. This maximum distance decreases as the number of segments increases and the number of segments is selected so that the maximum distance is less than a predetermined distance, for example 2 or 3 pixel sizes.

Figure 4a illustrates a method of computing the number of segments. A straight line segment 42 approximating the boundary edge 46 is extended once with its own length resulting in an endpoint 43. The location to which this endpoint maps in the image is computed: if the mapped segment extends between p1 and p2 the endpoint is pe=p2+ (p2-p1). Also the location in the image where the endpoint 45 pn of the next straight line segment 44 maps is computed. The number of segments is selected so that the vector pn-pe connecting the location of the two endpoints 43, 45 is less than a predetermined number of pixels (e.g. 2 or 3 pixels) long. In case of surface patches described as quadratic Bezier triangles, the length of the vector pn-pe is approximately the same for any segment and inversely proportional to the number of segments, which makes it possible to compute the desired number of segments from one determination of the distance between the endpoints 43, 45 for a test value of the number of segments.

Given the sets of straight line segments used to approximate the boundary edges of the curved surface patch, a set of flat triangles is generated that approximates the interior of the curved surface patch. For this purpose several methods will be described.

In case each of the boundary edges is approximated by fewer than 4 straight line segments a point in the interior of the surface patch is selected, for example the barycentre (average of the three corner points), and a set of triangles is generated that have the selected point at their top and respective straight line segments along the boundary edges at their base. In case any one of the boundary edges is approximated by 4 or more straight line segments, more corner points for flat triangles are generated for the interior of the curved surface patch.

Figures 5a-e illustrate an embodiment of the generation of a set of flat triangles in that case. In these and the following figures use will be made of a representation in two-dimensional barycentric surface coordinate space (u,v,w) u+v+w=1. The description of the curved surface will provide a mapping from these two-dimensional barycentric surface coordinates (u,v,w) to three dimensional coordinates (x,y,z), as is the case for surface patches described as triangular Bezier patches. In actual practice often homogeneous four dimensional coordinates (x,y,z,w) (w=1 initially) equivalent to three dimensional coordinates are also used to represent a three dimensional point. This is convenient for clipping purposes, but does not affect the present invention. Nodes and lines connecting these points will be shown in the two-dimensional surface coordinate space. To indicate flat triangles the following convention will be used: when three such nodes are shown connected by lines in a triangle in two dimensional surface coordinates, this represents a flat triangle having as corner points the points to which the nodes map according to the description of the curved surface patch only when no further lines are shown crossing the triangle in two dimensional surface coordinate space.

Figure 5a shows a surface coordinate space representation of a triangular surface patch with boundary edges 50, 52, 54. On each boundary edge 50, 52, 54 nodes 500a-e, 520a-c, 540a-c have been indicated by dots. Using the mapping from two-dimensional barycentric surface coordinates (u,v,w) to three dimensional coordinates (x,y,z) these nodes correspond to points in three dimensional space. These points link the straight line segments used to approximate the boundary edges. (In surface coordinate (u,v,w) space the boundary edges are represented as straight lines, as in the case of Bezier triangles, but mapped to three dimensional space these boundary edges may become curved).

In a first step, it is determined which of the boundary edges 50, 52, 54 is approximated by the greatest number of segments, or at least by no fewer segments than any of the other boundary edges. This boundary edge will be called the first selected edge. In a second step it is determined which of the remaining edges is approximated by the least number of segments, or at least by no greater number than the other remaining edge. This boundary edge will be called the second selected edge. In figure 5a the surface patch is shown so that the first selected edge 50 is shown on the right and the second selected edge 52 at the bottom.

The selected edges are used to define nodes in the interior of the triangle. Figures 5b-d illustrates the nature of this definition step by step.

In figure 5b an interface line 56 has been drawn connecting a top node at the intersection of the left and right boundary edge to a first node 520a on the left inside the bottom boundary edge 52. Furthermore horizontal lines have been drawn starting from each of the points 500a-e on the right boundary edge 50 (i.e. from the nodes on the boundary edge with the highest number of nodes) to the interface line 56.

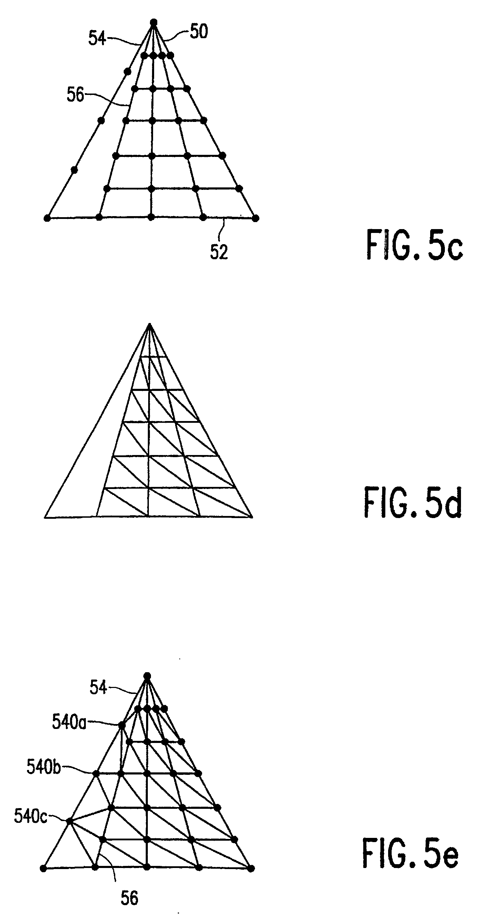

In figure 5c auxiliary lines have been added between the top node and the other nodes 520a-c on the bottom boundary edge. Intersections between the auxiliary lines and the horizontal lines are shown. Each of the horizontal lines corresponds to a set of straight line segments and the intersections on a horizontal line represent points in surface coordinates that are mapped to nodes which link the straight line segments in the set corresponding to that horizontal line. Each pair of successive horizontal lines surrounds a band on the surface patch. Such a band is approximated by flat triangles that have the intersections as corner points. Each intersection on the horizontal lines surrounding the band is used as a corner point in at least two triangles, in combination with an intersection on the other horizontal line surrounding the band and a next intersection, either on the same horizontal line or the other horizontal line. Figure 5d shows an example of how the intersections may be connected to obtain triangles (note that the connections run along the auxiliary lines, which is a preferred embodiment, but that other connections could be used instead of the auxiliary lines also).

Finally, in figure 5e, triangles are added for the area of the surface patch between the boundary edge at the left and the interface line, called the interface band. The triangles that approximate the interface band have the nodes 540a-c on the left boundary 54 and the intersections of the horizontal line and the interface line 56 as corner points.

Preferably, the nodes on the left boundary 500a-e and the horizontal lines are spaced equidistantly in surface coordinate (u,v) space. Similarly, the nodes on the bottom boundary 520a-c are preferably spaced equidistantly, and therefore the intersections on each horizontal line are also equidistant.

Overall, the generation of triangles illustrated in figures 5a-e involves the following steps

1) compute the respective numbers of segments by which the boundary edges should be approximated
2) select a first selected boundary edge which is approximated by no fewer segments than any other edge
3) select a second selected boundary edge which is approximated by no more segments than any other edge
4) for each node on the first selected boundary edge: generate the same number of evenly spaced nodes along a line (a "horizontal" line in the figure) extending from that node in parameter space, the line extending in parallel to the second selected boundary edge in parameter space, the spacing between the nodes in parameter space being proportional to the line number as counted from the node opposite the second selected boundary edge
5) compute the coordinates of the points to which the nodes map
6) form a mesh of triangles connecting the points

When it is determined that the first selected edge 50 (which is approximated by no fewer segments than any of the other edges) is approximated by just as many segments as a further boundary edge (the left edge), the interface band is not necessary and the horizontal lines will run from the nodes on the right edge to the nodes on the left edge. In this case, each horizontal line contains just as many nodes as the second selected edge (shown as the bottom edge 52).

Preferably, the surface coordinates (u,v,w) map to three dimensional coordinates (x,y,z) according to a polynomial function, e.g. a quadratic function:

$$x = x_{200} B_{200}(u,v,w) + x_{020} B_{020}(u,v,w) + x_{002} B_{002}(u,v,w)$$

$$+ x_{110} B_{110}(u,v,w) + x_{101} B_{101}(u,v,w) + x_{011} B_{011}(u,v,w)$$

$$y = y_{200} B_{200}(u,v,w) + y_{020} B_{020}(u,v,w) + y_{002} B_{002}(u,v,w)$$

$$+ y_{110}B_{110}(u,v,w) + y_{101} B_{101}(u,v,w) + y_{011} B_{011}(u,v,w)$$

$$z = z_{200} B_{200}(u,v,w) + z_{020} B_{020}(u,v,w) + z_{002} B_{002}(u,v,w)$$

$$+ z_{110} B_{110}(u,v,w) + z_{101} B_{101}(u,v,w) + z_{011} B_{011}(u,v,w)$$

Where $x_{ijk}$, $y_{ijk}$ and $z_{ijk}$ (i,j,k=0, 1 or 2) are the coordinates of the control points ijk (i,j,k=0, 1 or 2); u,v,w with u+v+w=1 are barycentric coordinates; $B_{ijk}(u,v,w)$ = u**i v**j w**k 2/(i!j!k!) (** indicating exponentiation) are second degree Bernstein polynomials.

The use of a polynomial function makes it possible to compute the three dimensional coordinates for the nodes on each horizontal line iteratively, one node after the other on each horizontal line, by additions but without requiring multiplication. For example, using a second degree polynomial, the x-coordinate $x_i$ of successive nodes labelled "i" (i=0,1,2..) on a horizontal line is computed using increments "$d_i$" and "e" according to

$$d_{i+1} = d_i + e$$

$$x_{i+1} = x_i + d_{i+1}$$

Analogous relations hold for the y and z coordinates $y_i$ $z_i$. To speed up processing the computation of the coordinates can be easily implemented in an integrated circuit, using a dedicated signal processing circuit. If a polynomial of higher degree is used, d will be computed by adding a second order increment instead of e, the second order increment being computed by forward difference like d itself. For realistic graphics rendering normals to the curved surface patch and texture coordinates are needed in combination with the x,y and z coordinates for each node. When the parameter space dependence of these normals and texture coordinates is approximated by a polynomial function these parameters may also be computed using forward differences. Thus the computation of these parameters can also be easily implemented in an integrated circuit, using similar or identical signal processing circuits as for the coordinate computation.

The initial values $x_0$ $d_0$ e are readily derived from the polynomial used and the parameters of the line along which the nodes lie. For example if the line "m" has constant v-coordinate $v_m$ and the u step-size from node to node along the line m is $h_m$, then

$$x_0 = x_{020} v_m^2 + x_{002} (1-v_m)^2 + x_{011} v_m(1-v_m)$$

$$d_0 = x_{200}^2 + x_{002}(h_m^2 - 2h_m(1-v_m)) + x_{110} h_m v_m + x_{101}(h_m^2 + h_m (1-v_m)) -$$

$$x_{011} h_m v_m$$

$$e = 2h_m^2(x_{200} + x_{002} - x_{101})$$

Of course different initial values occur if a different type of polynomial is used. The initial values for successive horizontal lines in turn can be computed by forward differences derivable from the expressions given above, provided that the expressions for the initial values $x_0$, $d_0$ and e are polynomial functions of $v_m$. This is the case if $h_m^2$ and $h_m v_m$ are polynomial functions of $v_m$, for example if $h_m$ is proportional to $v_m$ as is the case in the example of figures 5a-e when the nodes and the horizontal lines are evenly spaced and the extreme nodes on each horizontal line coincide with the boundary edges on the respective boundary edges on both sides of the horizontal lines. This forward difference computation also lends itself to implementation in an integrated circuit using adder circuits. Thus only the initial values for the top of the triangle need to be computed and fed to the forward difference circuits which can then compute the coordinates of all points for the curved surface patch by simple additions.

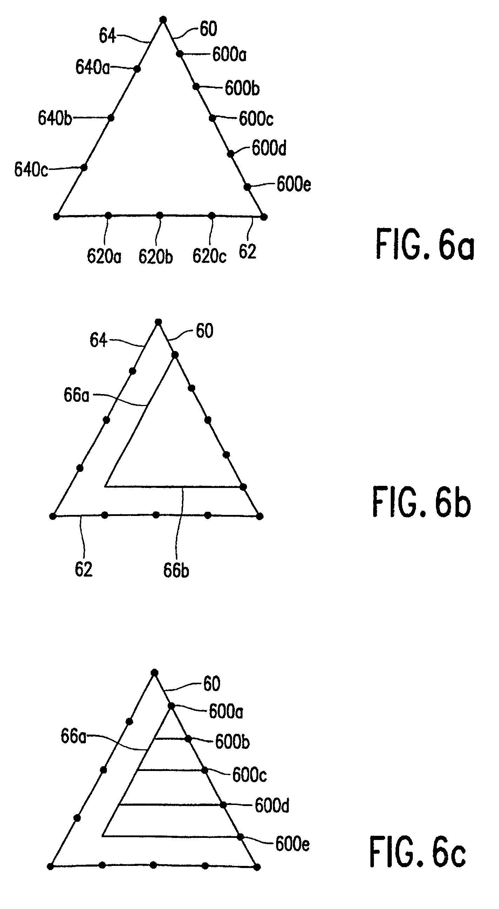

$h_m^2$ and $h_m v_m$ are also polynomial functions of $v_m$ if $h_m$ has the same constant value for each $v_m$. Figure 6a-

e illustrate another embodiment of the generation of a set of flat triangles in which the step-size is constant. Figure 6a is similar to figure 5a and shows a surface patch in two-dimensional surface coordinate space, with boundary edges 60, 62, 62 including nodes 600a-e, 620a-c, 640a-c.

In figure 6b the boundary edge 60 with the maximum number "n" of segments has been selected and two interface lines 66a-b are shown running in parallel (in surface coordinate space) with the other boundary edges 62, 64 of the surface patch. The distance between an interface edge 66a-b and the boundary edge 62, 64 to which it runs in parallel is such that the interface edge would cut 1/n$^{th}$ part from the other boundary edges, if it were extended to the other edges. Here "n" is the highest of the number of segments used to approximate any of the boundary edges.

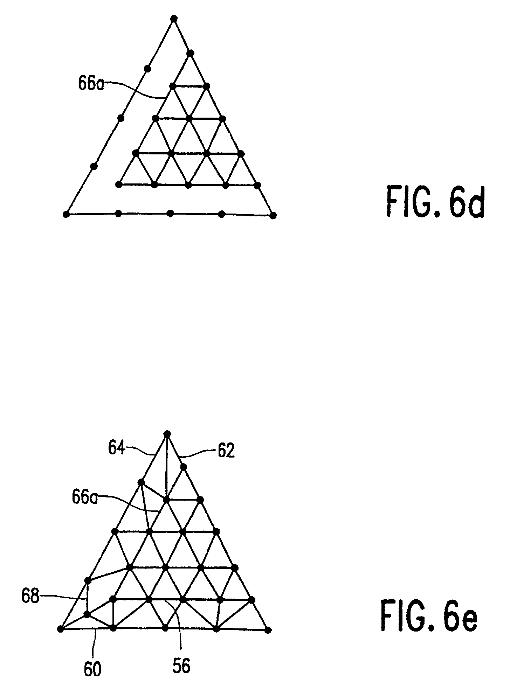

In figure 6c horizontal lines are shown in the inner area enclosed by the interface lines 66a-b and one of the boundary edges 60. The horizontal lines extend from the nodes 600a-e on the right boundary edge 60 which contains the highest number of segments (or at least a not-lower number of segments than any other boundary edge). In figure 6d equidistant nodes have been selected on each horizontal line. On each horizontal line the leftmost node is on the intersection with the left interface line 66a and the rightmost node is on the right boundary edge 60. The number of nodes per horizontal line increases by one for successive horizontal lines from top to bottom. The nodes are mapped to points on the surface patch in three dimensional space and the mapped nodes constitute the corner points of the flat triangles. Zig-zag connections between successive nodes on pairs of adjacent horizontal lines are shown, indicating the connections between the cornerpoints of the flat triangles.

In figure 6e a common additional cornerpoint 68 is added to both interface lines 66a,b in the middle between the intersection of the two interface lines 66a,b and the intersection of their corresponding boundary edges 60, 64. Interface bands between the interface lines 66a-b and the boundary edges 62, 64 have been filled in with triangles that have at least one cornerpoint on both a boundary edge 60, 64 and an interface line 66a,b/additional cornerpoint 68, the cornerpoints being selected from the nodes between the straight line segments used to approximate the boundary edges 60, 62, 64 and the nodes on the interface lines 66a,b. The additional point 68 is added to prevent visual artifacts due to the relatively large gap near the intersection of the interface lines, when there are two interface lines.

Interface bands are unnecessary for further boundary edges that are approximated by the same number of segments as the first selected boundary edge (the boundary edge approximated by the greatest number of segments, or at least by no fewer segments than any other boundary edge). In that case, the extreme nodes on each line connecting the further boundary edge and the first selected boundary edge coincide with these the first selected boundary edge and the further boundary edge respectively.

The method of figure 6a-e differs from that of figure 5a-e only in that the spacing between the nodes is the same on each "horizontal" line. Furthermore, any one of the boundary edges may be selected as second selected boundary edge (not only the one containing the fewest nodes), but if any one of the boundary edges contains as many nodes as the first selected boundary edge and the remaining boundary edge contains fewer nodes, then preferably the remaining edge is used as second selected boundary edge, so that the "horizontal" lines run in parallel to that second selected boundary edge between the two other edges that contain mutually the same number of nodes.

When the nodes are evenly spaced in parameter space, the three dimensional coordinates (x,y,z) to which the nodes map can again be computed by forward differences, using the same techniques as described hereinbefore. The initial values of these forward differences for successive horizontal lines in turn can also be computed by forward differences because the step-size between the nodes on the horizontal lines in (u,v,w) space is constant making $h_m^2$ constant and $h_m v_m$ a linear polynomial in $v_m$.

A respective interface band needs to be used near each of the boundary edges that is approximated by fewer segments than the boundary edge that is approximated by the greatest number of segments. It should be noted that this is in contrast to the method of selecting nodes illustrated by figure 5a-e, where no interface band is needed for the lower boundary edge 52, even when this lower boundary edge is approximated by fewer segments than the right boundary edge 50.

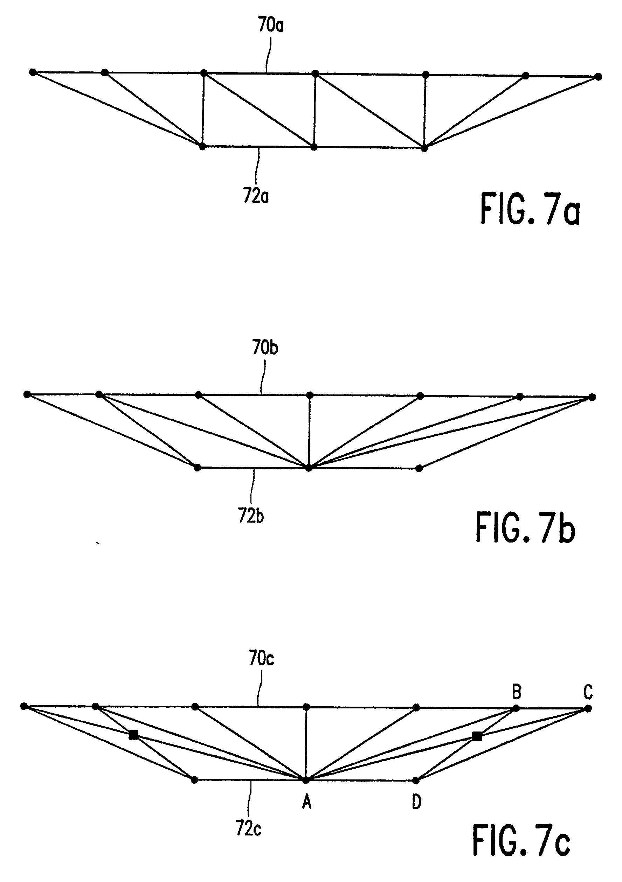

Figures 7a-c show the results of several generally applicable methods of generating flat triangles in an interface band. In each example the interface band is shown enclosed between two lines 70a-c, 72a-c. Each line 70a-c, 72a-c represents a set of linked straight line segments in two-dimensional surface coordinates. Nodes 700a-c and 720a-c are shown at the points where the straight line segments are linked. The methods shown in figures 7a-c make use of the fact that it is easy to generate flat triangles between two lines that contain the same number of nodes (plus or minus one) by connecting successive nodes from one line to successive lines of the other line and dividing the quadrangles formed in this way along diagonals. In the methods the lines 70a-b, 72a-b are divided into parts containing nodes that can be so connected and into remaining nodes on a line that are connected to a common node.

The method shown in figure 7a takes a central part from a first line 70a containing the most nodes, the central part containing as many nodes as a second line 72a containing the least nodes. The nodes of the central part and the of the second line 72a are connected successively. The nodes that remain on the first line 70a to the left and right of the central part are connected to the nodes at the endpoints of the second line 72a.

The method shown in figure 7b divides the second line 72b, which contains the least nodes into a left and right part meeting at a central node. Further left and right parts are taken from right and left extreme of the first line 70b that contains the most nodes. The further left and right part contain as many nodes as the left and right part respectively and are successive nodes of these parts are connected to successive nodes of the left and right part respectively. The nodes that remain on the first line 70b between the further left and right parts are connected to the central node on the second line. This method gives a better image than the method shown in figure 7a if the number of nodes in the two lines 70b, 72b differs considerably.

The method shown in figure 7c is similar to that of figure 7b except that crossing diagonals are drawn between the successive connections in the left and right parts. At the crossings an additional node is added. Instead of at the intersection of the diagonals, the additional node may be located at the average of the four corners of the quadrangle in which it lies, the additional point being connected to the four corners. This method gives a better image in case of highlights.

In case more than one method of generating triangles is available, for example the two methods illustrated in figures 5a-e or 6a-e, a choice is preferably made for each curved surface patch as to which of the methods is used to approximate it by triangles. This is done for example by predicting the number of triangles that needs to be computed for each method and using one of those methods that requires no more triangles than the other method to generated the triangles. In the case of the two methods described above, the difference between the number of triangles can be expressed in N1, N2 and N3 the number of segments used for the various boundary edges sorted in non-increasing order (N1 > =N2> =N3)

$$\text{diff} = N1^2\text{-}7N1+6 \qquad \text{if N3} < 3 \text{ and N2} = N1$$

$$\text{diff} = N1^2\text{-}5N1+8 \qquad \text{if N3} < 3 \text{ and N2} < N1$$

$$\text{diff} = N1^2\text{-}N1(2N3+1)+4N3 \qquad \text{if N3} > = 3 \text{ and N2} = N1$$

$$\text{diff} = N1^2\text{-}N1(2N3\text{-}1)+4N3+3 \qquad \text{if N3} > = 3 \text{ and N2} < N1$$

If the difference "diff" is smaller than zero, the method with the same spacing between the nodes on each horizontal line should be used, otherwise the method with spacing proportional to the distance between the line and the "top" of the triangle. This choice can be simplified by an approximation: use proportional spacing if N3<3 or N1 > =2N3-1. To improve the quality of the approximation this is preferably overruled if the width of the triangle in three dimensional space halfway the triangle is greater than at the base: in that case constant spacing is preferably used.

## Claims

1. A computer graphics rendering method comprising the steps of

   - defining a curved surface patch in terms of a description of how a polygonal area in a parameter space maps onto the curved surface patch;
   - selecting, independently for each boundary edge of the polygonal area, a set of segmentation points along that boundary edge;
   - selecting a set of grid points inside the polygonal area;
   - computing coordinates for a set of mapped points on the surface patch to which the sets of segmentation points and the set of grid points map;
   - rendering an image of a mesh of flat triangles, nodes of the mesh having the coordinates of respective points in the set of mapped points;

   **characterized in that** the method comprises

   - selecting a boundary edge which has no fewer segmentation points than any of the other boundary edges of the polygonal area;
   - placing successive rows of the grid points along successive of straight lines in parameter space extending from successive segmentation points on the selected boundary edge.

**2.** A method according to Claim 1 **characterized in that** the polygonal area is a triangle, the method comprising determining whether two boundary edges of the triangle have the same number of segmentation points, which is no less than the number of segmentation points of the third boundary edge of the triangle, and **in that** case extending the straight lines between corresponding segmentation points on the two boundaries.

**3.** A method according to Claim 2 **characterized in that** the description provides a polynomial relation between coordinates in parameter space and coordinates of points on the curved surface patch, the grid points being evenly spaced along the straight lines, the coordinates of successive grid points along each straight line being determined by forward difference computation from the coordinates of respective preceding grid points on that straight line.

**4.** A method according to Claim 3, **characterized in that** initial values for use in said forward difference computation for successive straight lines are computed by a further forward difference computation from the initial values for preceding straight lines, respective spacings of the grid points on respective straight line being selected so that the respective spacing is equal to a further spacing between the segmentation points on the boundary edges between which the straight line extends and nearest grid points on the straight line, a number of grid points on each particular straight line being either the same for each straight line or increasing by a fixed number for successive straight lines away from a cornerpoint of the triangle where the two boundary edges intersect.

**5.** A method according to Claim 1 **characterized in that** said function is chosen so that a deviation between how a segment of the curve between two segmentation points should appear in a rendered image and a straight line in the rendered image between the segmentation points at the ends of the segment is less than a predetermined number of pixels of the rendered image.

**6.** A method according to Claim 1, **characterized in that** the polygonal area is a triangle, the method comprising selecting a further boundary edge containing no more segmentation points than any of the other boundary edges, the straight lines extending in parallel to the further boundary edge, each straight line containing the same number of grid points.

**7.** A method according to Claim 1, wherein at least two methods of selecting the grid points are available, the graphics rendering method comprising computing which of the at least two methods for selecting the grid points generates the fewest triangles, the method of selecting the grid points that generates the fewest triangles or at least no more than any other of the at least two method being selected for generating the triangles.

**8.** A computer graphics rendering device comprising

-   a memory (10) for storing a definition of a curved surface patch in terms of a description of how a polygonal area in a parameter space maps onto the curved surface patch;
-   first selecting means (14) for selecting, independently for each boundary edge of the polygonal area, a set of segmentation points along that boundary edge;
-   second selecting means (14) for selecting a set of grid points inside the polygonal area;
-   a computation circuit (12, 14) for computing coordinates for a set of mapped points on the surface patch to which the sets of segmentation points and the set of grid points map;
-   rendering means (16) for rendering an image of a mesh of flat triangles, nodes of the mesh having the coordinates of respective points in the set of mapped points;

**characterized in that** the device comprises

-   a selector (14) for selecting a boundary edge which has no fewer segmentation points than any of the other boundary edges of the polygonal area; the second selecting means placing successive rows of the grid points along successive of straight lines in parameter space extending from successive segmentation points on the selected boundary edge.

**9.** A device according to Claim 8, the polygonal area being a triangle, the selector determining whether two boundary edges of the triangle have the same number of segmentation points, which is no less than the number of segmentation points of the third boundary edge of the triangle, the second selecting means in that case extending the straight lines between corresponding segmentation points on the two boundaries.

**10.** A device according to Claim 9, the description providing a polynomial relation between coordinates in parameter space and coordinates of points on the curved surface patch, the grid points being evenly spaced along the straight lines, the device comprising a forward difference computation circuit for computing the coordinates of successive grid points along each straight line being by forward difference computation from the coordinates of respective preceding grid points on that straight line.

**11.** A device according to Claim 10, wherein initial values for use in said forward difference computation for successive straight lines are computed by a further forward difference computation from the initial values for preceding straight lines, respective spacings of the grid points on respective straight line being selected so that the respective spacing is equal to a further spacing between the segmentation points on the boundary edges between which the straight line extends and nearest grid points on the straight line, a number of grid points on each particular straight line being either the same for each straight line or increasing by a fixed number for successive straight lines away from a cornerpoint of the triangle where the two boundary edges intersect.

**12.** A device according to Claim 8, wherein said function is chosen so that a deviation between how a segment of the curve between two segmentation points should appear in a rendered image and a straight line in the rendered image between the segmentation points at the ends of the segment is less than a predetermined number of pixels of the rendered image.

**13.** A device according to Claim 8, the polygonal area being a triangle, the device selecting a further boundary edge containing no more segmentation points than any of the other boundary edges, the straight lines extending in parallel to the further boundary edge, each straight line containing the same number of grid points.

**14.** A device according to Claim 8, capable of at least two methods of selecting the grid points, the device computing which of the at least two methods for selecting the grid points generates the fewest triangles, the method of selecting the grid points that generates the fewest triangles or at least no more than any other of the at least two method being selected for generating the triangles.

**Patentansprüche**

**1.** Computergraphik-Rendering-Verfahren, das die nachfolgenden Verfahrensschritte umfasst:

- das Definieren eines gekrümmten Oberflächenfeldes in Termen einer Beschreibung, wie ein polygonales Gebiet in einem Parameterraum auf dem gekrümmten Oberflächenfeld abgebildet wird,
- das für jede Begrenzungsseite des polygonalen Gebietes Selektieren eines Satzes von Segmentierungspunkten längs dieser Begrenzungsseite,
- das Selektieren eines Satzes von Gitterpunkten innerhalb des polygonalen Gebietes,
- das Berechnen von Koordinaten für einen Satz abgebildeter Punkte auf dem Oberflächenfeld, auf dem die Sätze mit Segmentierungspunkten und der Satz mit Gitterpunkten abgebildet werden,
- das Rendern eines Bildes aus einem Netzwerk flacher Dreiecke, wobei die Knotenpunkte des Netzwerkes die Koordinaten der betreffenden Punkte in dem Satz abgebildeter Punkte haben,

**dadurch gekennzeichnet, dass** das Verfahren die nachfolgenden Verfahrensschritte umfasst:

- das Selektieren einer Begrenzungsseite, die nicht weniger Segmentierungspunkte hat als eine andere Begrenzungsseite des polygonalen Gebietes,
- das Anbringen aufeinander folgender Reihen der Gitterpunkte längs aufeinander folgender gerader Linien in dem Parameterraum, die sich von aufeinander folgenden Segmentierungspunkten auf der selektierten Begrenzungsseite erstrecken.

**2.** Verfahren nach Anspruch 1, **dadurch gekennzeichnet, dass** das polygonale Gebiet ein Dreieck ist, wobei das Verfahren den Verfahrensschritt umfasst, in dem bestimmt wird, ob zwei Begrenzungsflächen des Dreiecks die gleiche Anzahl Segmentierungspunkte haben, die nicht kleiner ist als die Anzahl Segmentierungspunkte der dritten Begrenzungsseite des Dreiecks, und dass in dem Fall die geraden Linien sich zwischen entsprechenden Segmentierungspunkten auf den zwei Begrenzungen erstrecken.

**3.** Verfahren nach Anspruch 2, **dadurch gekennzeichnet, dass** die Beschreibung eine polygonale Beziehung zwischen Koordinaten in dem Parameterraum und Koordinatenpunkten in dem gekrümmten Oberflächenfeld schafft, wobei die Gitterpunkte längs der geraden Linien gleichmäßig verteilt sind, wobei die Koordinaten aufeinander folgender Gitterpunkte längs jeder geraden Linie durch "forward difference" Berechnung aus den Koordinaten betreffender vorhergehender Gitterpunkte auf dieser geraden Linie bestimmt werden.

4. Verfahren nach Anspruch 3, **dadurch gekennzeichnet, dass** Ausgangswerte zur Verwendung bei der genannten "forward difference" Berechnung für aufeinander folgende gerade Linien durch eine weitere "forward difference" Berechnung aus den Ausgangswerten für vorhergehende gerade Linien berechnet werden, wobei die betreffenden Zwischenräume der Gitterpunkte auf der betreffenden geraden Linie derart selektiert werden, dass der betreffende Zwischenraum einem weiteren Zwischenraum zwischen den Segmentierungspunkten auf den Begrenzungsseiten, zwischen denen die gerade Linie sich erstreckt, und den meist nahe liegenden Gitterpunkten auf der geraden Linie entspricht, wobei eine Anzahl Gitterpunkte auf jeder betreffenden geraden Linie entweder für jede gerade Linie dieselben sind oder für aufeinander folgende gerade Linien weg von einem Eckpunkt des Dreiecks, wo die zwei Begrenzungsseiten sich schneiden, um eine feste Anzahl zunehmen.

5. Verfahren nach Anspruch 1, **dadurch gekennzeichnet, dass** die genannte Funktion derart gewählt wird, dass eine Abweichung zwischen wie ein Segment der Krümmung zwischen zwei Segmentierungspunkten in einem gerenderten Bild erscheinen sollen und einer geraden Linie in dem gerenderten Bild zwischen den Segmentierungspunkten an den Enden des Segmentes kleiner ist als eine vorbestimmte Anzahl Pixel des gerenderten Bildes.

6. Verfahren nach Anspruch 1, **dadurch gekennzeichnet, dass** das polygonale Gebiet ein Dreieck ist, wobei dieses Verfahren das Selektieren einer weiteren Begrenzungsseite umfasst, die nicht mehr Segmentierungspunkte aufweist als irgend eine andere der Begrenzungsseiten, wobei die geraden Linien sich parallel zu der weiteren Begrenzungsseite erstrecken, wobei jede gerade Linie die gleiche Anzahl Gitterpunkte aufweist.

7. Verfahren nach Anspruch 1, wobei wenigstens zwei Verfahren zum Selektieren der Gitterpunkte verfügbar sind, wobei das Graphik-Rendering-Verfahren einen Berechnungsvorgang umfasst, welches der wenigstens zwei Verfahren zum Selektieren der Gitterpunkte die wenigsten Dreiecke erzeugt, wobei das Verfahren zum Selektieren der Gitterpunkte, das die wenigsten Dreiecke erzeugt oder wenigstens nicht mehr als irgend ein anderes der wenigstens zwei Verfahren, zum Erzeugen der Dreiecke selektiert wird.

8. Computergraphik-Rendering-Einrichtung, wobei diese Einrichtung die nachfolgenden Elemente umfasst:

- einen Speicher (10) zum Speichern einer Definition eines gekrümmten Oberflächenfeldes in Termen einer Beschreibung davon, wie ein polygonales Gebiet in einem Parameterraum auf dem gekrümmten Oberflächenfeld abgebildet wird;
- erste Selektionsmittel (14) um, unabhängig für jede Begrenzungsseite des polygonalen Gebietes einen Satz von Segmentierungspunkten längs dieser Begrenzungsseite zu selektieren,
- zweite Selektionsmittel (14) um einen Satz von Gitterpunkten innerhalb des polygonalen Gebietes zu selektieren,
- eine Berechnungsschaltung (12, 14) zum Berechnen von Koordinaten für einen Satz abgebildeter Punkte auf dem Oberflächenfeld, auf dem die Sätze von Segmentierungspunkten und der Satz von Gitterpunkten abgebildet werden,
- Renderingmittel (16) zum Rendern eines Bildes eines Netzwerkes von flachen Dreiecken, wobei Knotenpunkte des Netzwerkes die Koordinaten der betreffenden Punkte in dem Satz von abgebildeten Punkten haben,

**dadurch gekennzeichnet, dass** die Einrichtung weiterhin die nachfolgenden Elemente umfasst:

- einen Selektor (14) zum Selektieren einer Begrenzungsseite, die nicht weniger Segmentierungspunkte hat als irgend eine der anderen Begrenzungsseiten des polygonalen Gebietes; wobei die zweiten Selektionsmittel aufeinander folgende Reihen der Gitterpunkte längs der aufeinander folgenden geraden Linien in dem Parameterraum setzen, der sich von den aufeinander folgenden Segmentierungspunkten auf der selektierten Begrenzungsseite erstreckt.

9. Einrichtung nach Anspruch 8, wobei das polygonale Gebiet ein Dreieck ist, wobei der Selektor bestimmt, ob zwei Begrenzungsseiten des Dreiecks die gleiche Anzahl Segmentierungspunkte haben, die nicht kleiner ist als die Anzahl Segmentierungspunkte auf der dritten Begrenzungsseite des Dreiecks, wobei die zweiten Selektionsmittel sich in diesem Fall als gerade Linien zwischen entsprechenden Segmentierungspunkten auf den zwei Begrenzungen erstrecken.

**10.** Einrichtung nach Anspruch 9, wobei die Beschreibung ein polygonales Verhältnis zwischen Koordinaten in dem Parameterraum und Koordinaten von Punkten auf der gekrümmten Oberflächenfeld schafft, wobei die Gitterpunkte gleichmäßig über die geraden Linien verteilt sind, wobei die Einrichtung eine "forward difference" Berechnungsschaltung aufweist zum Berechnen der Koordinaten aufeinander folgender Gitterpunkte längs jeder geraden Linie durch "forward difference" Berechnung aus den Koordinaten der betreffenden vorhergehenden Gitterpunkte auf dieser geraden Linie.

**11.** Einrichtung nach Anspruch 10, wobei Ausgangswerte zur Verwendung in der genannten "forward difference" Berechnung für aufeinander folgende Linien durch eine weitere "forward difference" Berechnung aus den Ausgangswerten für vorhergehende gerade Linien berechnet werden, wobei die betreffenden Zwischenräume der Gitterpunkte auf der betreffenden geraden Linie derart selektiert werden, dass der betreffende Zwischenraum einem weiteren Zwischenraum zwischen den Segmentierungspunkten auf den Begrenzungsseiten entspricht, zwischen denen die gerade Linie sich erstreckt, und den meist nahe liegenden Gitterpunkten auf der geraden Linie, wobei eine Anzahl Gitterpunkte auf jeder bestimmten geraden Linie entweder für jede gerade Linie gleich ist oder für aufeinander folgende gerade Linien, weg von einem Eckpunkt des Dreiecks, an dem sich die zwei Begrenzungsseiten schneiden, um eine feste Anzahl zunimmt.

**12.** Einrichtung nach Anspruch 8, wobei die genannte Funktion derart gewählt wird, dass eine Abweichung zwischen wie ein Segment der Krümmung zwischen zwei Segmentierungspunkten in einem gerenderten Bild erscheinen soll, und einer geraden Linie in dem gerenderten Gebiet zwischen den Segmentierungspunkten an den Enden des Segmentes kleiner ist als eine vorbestimmte Anzahl Pixel des gerenderten Bildes.

**13.** Einrichtung nach Anspruch 8, wobei das Polygonale Gebiet ein Dreieck ist, wobei die Einrichtung eine weitere Begrenzungsseite selektiert, die nicht mehr Segmentierungspunkte aufweist als irgend eine der anderen Begrenzungsseiten, wobei die geraden Linien sich parallel zu der weiteren Begrenzungsseite erstrecken, wobei jede gerade Linie die gleiche Anzahl Gitterpunkte aufweist.

**14.** Einrichtung nach Anspruch 8, die imstande ist, mit wenigstens zwei Verfahren zum Selektieren der Gitterpunkte zu arbeiten, wobei die Einrichtung berechnet, welches der wenigstens zwei Verfahren zum Selektieren der Gitterpunkte die wenigsten Dreiecke erzeugt, wobei das Verfahren zum Selektieren der Gitterpunkte, das die wenigsten Dreiecke erzeugt oder wenigstens nicht mehr als irgend ein anderes der wenigstens zwei Verfahren zum Erzeugen der Dreiecke erzeugt, selektiert wird.

## Revendications

**1.** Procédé de rendu infographique comprenant les étapes suivantes :

- définir un morceau de surface courbe en termes d'une description de la manière dont une aire polygonale dans un espace paramétrique est mappée sur le morceau de surface courbe ;
- sélectionner, indépendamment pour chaque bord limite de l'aire polygonale, un jeu de points de segmentation le long de ce bord limite ;
- sélectionner un jeu de points de grille à l'intérieur de l'aire polygonale ;
- calculer des coordonnées pour un jeu de points mappés sur le morceau de surface sur lequel les jeux de points de segmentation et le jeu de points de grille sont mappés ;
- rendre une image d'un maillage de triangles plats, des noeuds du maillage comportant les coordonnées de points respectifs dans le jeu de points mappés ;

**caractérisé en ce que** le procédé comprend les étapes suivantes :

- sélectionner un bord limite qui ne comprend pas moins de points de segmentation que l'un quelconque des autres bords limites de l'aire polygonale ;
- placer des rangées successives des points de grille le long de lignes droites successives dans un espace paramétrique s'étendant de points de segmentation successifs sur le bord limite sélectionné.

**2.** Procédé suivant la revendication 1, **caractérisé en ce que** l'aire polygonale est un triangle, le procédé comprenant la détermination de si oui ou non deux bords limites du triangle comprennent le même nombre de points de segmentation, qui n'est pas inférieur au nombre de points de segmentation du troisième bord limite du triangle, et dans ce cas l'extension des lignes droites entre des points de segmentation correspondant sur les deux limites.

3.  Procédé suivant la revendication 2, **caractérisé en ce que** la description fournit un rapport polynomial entre des coordonnées dans un espace paramétrique et des coordonnées de points sur le morceau de surface courbe, les points de grille étant régulièrement espacés le long de lignes droites, les coordonnées de points de grille successifs le long de chaque ligne droite étant déterminées par calcul par différence directe à partir des coordonnées de points de grille précédents respectifs sur cette ligne droite.

4.  Procédé suivant la revendication 3, **caractérisé en ce que** des valeurs initiales à utiliser dans ledit calcul par différence directe pour des lignes droites successives sont calculées par un autre calcul par différence directe à partir des valeurs initiales pour des lignes droites précédentes, des écartements respectifs des points de grille sur une ligne droite respective étant sélectionnés de sorte que l'écartement respectif est égal à un décalage supplémentaire entre les points de segmentation sur les bords limites entre lesquels la ligne droite s'étend et les points de grille les plus proches sur la ligne droite, un certain nombre de points de grille sur chaque ligne droite particulière étant soit le même pour chaque ligne droite ou augmentant d'un nombre fixe pour des lignes droites successives en s'éloignant d'un angle du triangle où les deux bords limites se coupent.

5.  Procédé suivant la revendication 1, **caractérisé en ce que** ladite fonction est sélectionnée de sorte qu'un décalage entre la manière dont un segment de la courbe entre deux points de segmentation doit apparaître dans une image rendue et une ligne droite dans l'image rendue entre les points de segmentation aux extrémités du segment est inférieur à un nombre prédéterminé de pixels de l'image rendue.

6.  Procédé suivant la revendication 1, **caractérisé en ce que** l'aire polygonale est un triangle, le procédé comprenant la sélection d'un autre bord limite ne contenant pas plus de points de segmentation que l'un quelconque des autres bords limites, les lignes droites s'étendant en parallèle à l'autre bord limite, chaque ligne droite contenant le même nombre de points de grille.

7.  Procédé suivant la revendication 1, dans lequel au moins deux procédés de sélection des points de grille sont disponibles, le procédé de rendu graphique comprenant le calcul de celui des au moins deux procédés pour sélectionner les points de grille qui génère le moins de triangles, le procédé de sélection des points de grille qui génère le moins de triangles ou au moins pas plus qu'un quelconque autre des au moins deux procédés étant sélectionné pour générer les triangles.

8.  Dispositif de rendu infographique comprenant :

    - une mémoire (10) pour mémoriser une définition d'un morceau de surface courbe en termes d'une description de la manière dont une aire polygonale dans un espace paramétrique est mappée sur le morceau de surface courbe ;
    - des premiers moyens de sélection (14) pour sélectionner, indépendamment pour chaque bord limite de l'aire polygonale, un jeu de points de segmentation le long de ce bord limite ;
    - des deuxièmes moyens de sélection (14) pour sélectionner un jeu de points de grille à l'intérieur de l'aire polygonale ;
    - un circuit de calcul (12, 14) pour calculer des coordonnées pour un jeu de points mappés sur le morceau de surface sur lequel les jeux de points de segmentation et le jeu de points de grille sont mappés ;
    - des moyens de rendu (16) pour rendre une image d'un maillage de triangles plats, des noeuds du maillage comportant les coordonnées de points respectifs dans le jeu de points mappés ;

    **caractérisé en ce que** le dispositif comprend :

    - un sélecteur (14) pour sélectionner un bord limite qui ne comprend pas moins de points de segmentation que l'un quelconque des autres bords limites de l'aire polygonale ; les deuxièmes moyens de sélection plaçant des rangées successives des points de grille le long de lignes droites successives dans un espace paramétrique s'étendant de points de segmentation successifs sur le bord limite sélectionné.

9.  Dispositif suivant la revendication 8, l'aire polygonale étant un triangle, le sélecteur déterminant si oui ou non deux bords limites du triangle comprennent le même nombre de points de segmentation, qui n'est pas inférieur au nombre de points de segmentation du troisième bord limite du triangle, les deuxièmes moyens de sélection dans ce cas étendant les lignes droites entre des points de segmentation correspondant sur les deux limites.

**10.** Dispositif suivant la revendication 9, la description fournissant un rapport polynomial entre des coordonnées dans un espace paramétrique et des coordonnées de points sur le morceau de surface courbe, les points de grille étant régulièrement espacés le long des lignes droites, le dispositif comprenant un circuit de calcul par différence directe pour calculer les coordonnées de points de grille successifs le long de chaque ligne droite par calcul par différence directe à partir des coordonnées de points de grille précédents respectifs sur cette ligne droite.

**11.** Dispositif suivant la revendication 10, dans lequel des valeurs initiales à utiliser dans ledit calcul par différence directe pour des lignes droites successives sont calculées par un autre calcul par différence directe à partir des valeurs initiales pour des lignes droites précédentes, des écartements respectifs des points de grille sur une ligne droite respective étant sélectionnés de sorte que l'écartement respectif est égal à un écartement supplémentaire entre les points de segmentation sur les bords limites entre lesquels la ligne droite s'étend et les points de grille les plus proches sur la ligne droite, un certain nombre de points de grille sur chaque ligne droite particulière étant soit le même pour chaque ligne droite ou augmentant d'un nombre fixe pour des lignes droites successives en s'éloignant d'un angle du triangle où les deux bords limites se coupent.

**12.** Dispositif suivant la revendication 8, dans lequel ladite fonction est sélectionnée de sorte qu'un décalage entre la manière dont un segment de la courbe entre deux points de segmentation doit apparaître dans une image rendue et une ligne droite dans l'image rendue entre les points de segmentation aux extrémités du segment est inférieur à un nombre prédéterminé de pixels de l'image rendue.

**13.** Dispositif suivant la revendication 8, l'aire polygonale étant un triangle, le dispositif sélectionnnant un autre bord limite ne contenant pas plus de points de segmentation que l'un quelconque des autres bords limites, les lignes droites s'étendant en parallèle à l'autre bord limite, chaque ligne droite contenant le même nombre de points de grille.

**14.** Dispositif suivant la revendication 8, capable d'au moins deux procédés de sélection des points de grille, le dispositif calculant celui des au moins deux procédés pour sélectionner les points de grille qui génère le moins de triangles, le procédé de sélection des points de grille qui génère le moins de triangles ou au moins pas plus qu'un quelconque autre des au moins deux procédés étant sélectionné pour générer les triangles.

FIG. 1

FIG. 2

FIG. 3

FIG. 4

FIG. 5a

FIG. 5b

FIG.5c

FIG.5d

FIG.5e

17

FIG. 6a

FIG. 6b

FIG. 6c

66a

FIG. 6d

64  62

66a

68

60  56

FIG. 6e

70a

72a

FIG.7a

70b

72b

FIG.7b

70c

B    C

A    D

72c

FIG.7c